# EUROPÄISCHE PATENTANMELDUNG

(11) **EP 0 927 842 A2**
(43) Veröffentlichungstag der Anmeldung: **07.07.1999**
(21) Anmeldenummer: 98119034.1
(22) Anmeldetag: 08.10.1998
(51) Int. Cl.: F16J 15/06

(54) **Ansaug-/Auspuffkrümmerdichtung**

(30) Priorität: 02.01.1998 DE 19800076
(71) Anmelder: Volkswagen Aktiengesellschaft, 38436 Wolfsburg (DE)
(72) Erfinder: Haack, Felix, 38106 Braunschweig (DE)

(57) **Zusammenfassung**

Die Erfindung betrifft eine Dichtung (10,40) für eine Verbindungsstelle zwischen einem Zylinderkopf und einem Ansaugluft- und einem Abgaskrümmer einer Brennkraftmaschine, insbesondere eines Kraftfahrzeuges, wobei die Dichtung (10,40) entsprechend einer Anzahl von Ansaug- bzw. Abgasrohren des Krümmers wenigstens eine erste Öffnung (12,14,16,18) für einen Ansaugluftstrom und wenigstens eine zweite Öffnung (20,22,24,26) für einen Abgasstrom aufweist. Hierbei sind alle zweiten Öffnungen (20,22,24,26) für den Abgasstrom durch wenigstens eine mit Brücken (34) versehene Trennfuge (28) von den ersten Öffnungen (12,14,16,18) für den Ansaugluftstrom derart getrennt, daß die Dichtung (10,40) wenigstens ein Ansaugluft-Dichtungsteil (30) und wenigstens ein Abgaskrümmer-Dichtungsteil (32) aufweist.

## Beschreibung

Die Erfindung betrifft eine Dichtung für eine Verbindungsstelle zwischen einem Zylinderkopf und einem Ansaugluft- und einem Abgaskrümmer einer Brennkraftmaschine, insbesondere eines Kraftfahrzeuges, wobei die Dichtung entsprechend einer Anzahl von Ansaug- bzw. Abgasrohren des oder der Krümmer wenigstens eine erste Öffnung für einen Ansaugluftstrom und wenigstens eine zweite Öffnung für einen Abgasstrom aufweist, gemäß dem Oberbegriff des Anspruchs 1.

Aus der DE 27 14 776 C2 ist eine Zylinderkopfdichtung für Verbrennungskraftmaschinen bekannt, wobei sich zwischen einem inneren ringscheibenförmigen Dichtungsbereich eines Dichtungsmaterials und einem radial weiter außen liegenden Dichtungsbereich des Dichtungsmaterials eine ringförmige Trennfuge ausgebildet ist. Durch die ringförmige Trennfuge, welche eine Unterbrechung der Materialverbindung zwischen den Dichtungsbereichen darstellt, werden Relativbewegungen in radialer Richtung in engen Grenzen zwischen diesen Dichtungsbereichen ermöglicht.

Die DE 34 32 610 A1 beschreibt eine gattungsgemäße Dichtungsanordnung an einem Zylinderkopf einer Brennkraftmaschine, wobei Dichtungen zwischen Zylinderkopf und Ansaug- bzw. Abgasleitungen als einteilig trennbare Doppeldichtungen ausgebildet sind. Dies vermindert den Fertigungsaufwand für die Ansaugleitungen bzw. Abgasleitungen und für die Dichtungen. Dadurch, daß die Doppeldichtung teilbar ist, braucht nur noch eine Dichtungsart hergestellt und gelagert werden, da an den beiden Endzylinderköpfen einer Zylinderreihe je ein Teil der geteilten Doppeldichtung eingesetzt werden kann.

Es ist jedoch im Bereich der kombinierten Ansaugluft- und Abgaskrümmerdichtung zu beobachten, daß aufgrund der höheren thermischen Belastung desjenigen Dichtungsteils, welcher die Abgaskrümmerdichtung bildet und aufgrund von Kontakt mit hoch reaktiven bzw. aggressiven Abgasen im Bereich des Abgaskrümmer-Dichtungsteiles, die gesamte Dichtung früher auszuwechseln ist, als dies allein bei Betrachtung des Dichtungsbereiches in einem Ansaugluft-Dichtungsteil notwendig wäre.

Der vorliegenden Erfindung liegt daher die Aufgabe zugrunde, eine Dichtung der obengenannten Art zur Verfügung zu stellen, welche eine einfache Erstmontage und eine kostengünstige und einfache Wartung bzw. eine kostengünstige Austauschbarkeit erzielt.

Diese Aufgabe wird erfindungsgemäß durch eine Dichtung der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß alle zweiten Öffnungen der Dichtung für den Abgasstrom durch wenigstens eine Trennfuge von den ersten Öffnungen der Dichtung für den Ansaugluftstrom derart getrennt sind, daß die Dichtung wenigstens ein Ansaugluft-Dichtungsteil und wenigstens ein Abgaskrümmer-Dichtungsteil aufweist. Beide Dichtungsteile sind mit zumindest einer die Trennfuge durchsetzenden Brücke untereinander verbunden, so daß insgesamt eine einteilige Dichtung vorliegt.

Dies hat den Vorteil, daß bei einer Wartung wahlweise der eine oder der andere Dichtungsteil unter Zerstörung der Brücke oder der Brücken auswechselbar ist, ohne daß die gesamte Dichtung ersetzt werden muß. Dies reduziert in vorteilhafter Weise Wartungskosten. Insbesondere ist bei einem Defekt im Abgaskrümmer-Dichtungsteil eines Gleichstrom-Zylinderkopfes keine Demontage des Ansaugluftkrümmers erforderlich.

Eine einfache Handhabbarkeit und Erstmontage der erfindungsgemäßen Dichtung erzielt man dadurch, daß in der Trennfuge in vorbestimmten Abständen mehrere Brücken zwischen dem Ansaugluft-Dichtungsteil und dem Abgaskrümmer-Dichtungsteil ausgebildet sind.

Eine automatische Trennung der Dichtungsteile und eine entsprechend vereinfachte Austauschbarkeit der separaten Dichtungsteile erzielt man z. B. dadurch, daß die Brücken aus einem Material gefertigt sind, welches sich oder die Verbindung zwischen dem Ansaugluft-Dichtungsteil und dem Abgaskrümmer-Dichtungsteil bei einer Betriebstemperatur der Brennkraftmaschine löst. Alternativ oder ergänzend kann eine Relativverschiebung der Dichtungsteile zueinander die Trennung bewirken.

Eine flexible Austauschbarkeit von Dichtungsteilen einzelner Ansaugluft- bzw. Abgasübergänge von Zylinderkopf zum Ansaugluft- oder Abgaskrümmer erzielt man dadurch, daß die Trennfuge jeweils den Abgaskrümmer-Dichtungsteil und/oder den Ansaugluft-Dichtungsteil in mehrere Teile, insbesondere in zwei, drei oder vier Teile, teilt.

Weitere Merkmale, Vorteile und vorteilhafte Ausgestaltungen der Erfindung ergeben sich aus den abhängigen Ansprüchen, sowie aus der nachstehenden, beispielhaften Beschreibung der Erfindung anhand der beigefügten Zeichnungen. Diese zeigen in
- Fig. 1: einer erste bevorzugte Ausführungsform einer erfindungsgemäßen Dichtung und
- Fig. 2: einer zweite bevorzugte Ausführungsform einer erfindungsgemäßen Dichtung.

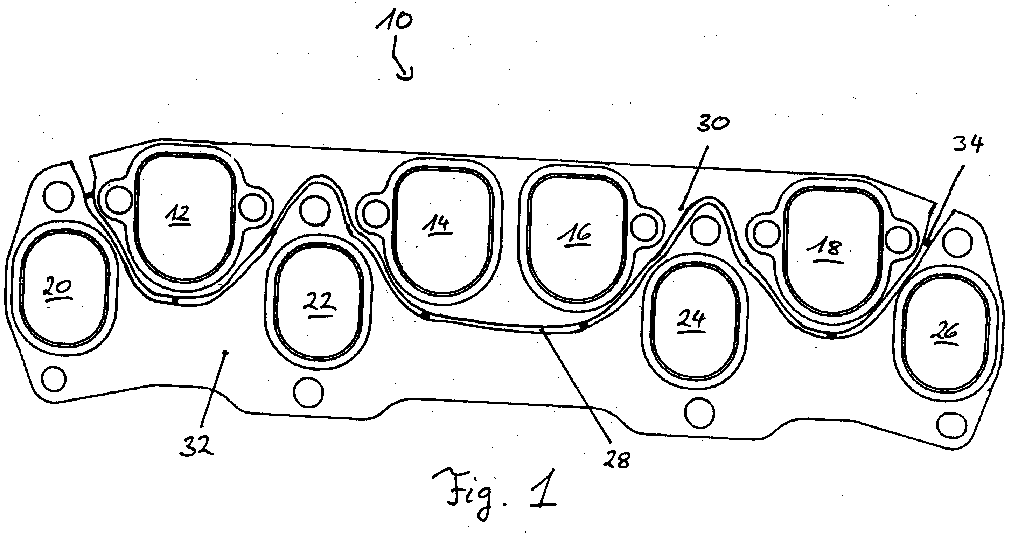

Die in Fig. 1 dargestellte erste Ausführungsform einer erfindungsgemäßen Dichtung 10 umfaßt Öffnungen 12, 14, 16 und 18 für einen Übergang von Ansaugluftrohren eines nicht dargestellten Ansaugluftkrümmers in entsprechende Kanäle für die Ansaugluft in einen nicht dargestellten Zylinderkopf einer nicht dargestellten Brennkraftmaschine. Durch diese Öffnungen 12, 14, 16 und 18 strömt Ansaugluft, welche als Verbrennungsluft einzelnen nicht dargestellten Zylindern der Brennkraftmaschine zugeführt wird.

Ferner umfaßt die Dichtung 10 Öffnungen 20, 22, 24 und 26 für einen Übergang von nicht dargestellten Abgaskanälen im Zylinderkopf in entsprechende nicht dargestellte Abgasrohre eines Abgaskrümmers. Durch diese Öffnungen 20, 22, 24 und 26 strömt Abgas, welches aus dem Zylinderkopf heraus über den Abgaskrümmer beispielsweise in eine nachfolgende Abgasbearbeitungsanlage, insbesondere einen Katalysator, geführt wird.

In der dargestellten bevorzugten Ausführungsform sind für Abgas und Ansaugluft jeweils vier Kanäle vorgesehen, was bei einer Vier-Zylinder-Brennkrattmaschine der Fall ist. Je nach Anzahl der Zylinder und Kanäle pro Zylinder für Abgas und Ansaugluft ist in der Dichtung 10 immer eine entsprechende Anzahl von Öffnungen vorgesehen.

Eine Trennfuge 28 teilt die Dichtung 10 in ein Ansaugluft-Dichtungsteil 30, welches nur Öffnungen 12, 14, 16 und 18 für den Ansaugluftbereich des Überganges von Ansaugluftkrümmer zum Zylinderkopf umfaßt, und in ein Abgaskrümmer-Dichtungsteil 32, welches nur Öffnungen 20, 22, 24 und 26 für den Abgasbereich des Überganges von Abgaskrümmer zum Zylinderkopf umfaßt. Brücken 34 bilden die Trennfuge 28 überbrückende Querverbindungen zwischen dem Ansaugluft-Dichtungsteil 30 und dem Abgaskrümmer-Dichtungsteil 32 aus, so daß die Dichtung bei einer Erstmontage einstückig als ein Teil handhabbar und einsetzbar ist. Diese Brücken 34 sind als Sollbruchstelle, d.h. wahlweise lösbar bzw. zerbrechbar, ausgebildet.

Die Öffnungen 20, 22, 24 und 26 und ihre Randbereiche sind einer erhöhten thermischen Belastung und aggressiven Abgasen ausgesetzt, während die Öffnungen 12, 14, 16 und 18 lediglich in Kontakt mit Ansaugluft kommen. Daher kann es sich bei einer späteren Wartung der Brennkraftmaschine herausstellen, daß zwar die Dichtungsbereiche der Öffnungen 12, 14, 16 und 18 für die Ansaugluft noch intakt sind, jedoch der Zustand der Dichtungsbereiche der Öffnungen 20, 22, 24 und 26 wenigstens teilweise einer Erneuerung des Dichtungsmaterials bedürfen. Durch die Trennfuge 28 ist es nun möglich, das Abgaskrümmer-Dichtungsteil 32 mit den entsprechenden Öffnungen 20, 22, 24, und 26 unter aufbrechen der Brücken 34 abzulösen und lediglich dieses Abgaskrümmer-Dichtungsteil 32 zu ersetzten. Trotz einteiliger Ausführung und Einbauweise der Dichtung 10 ist somit ein teilweiser Austausch der Dichtung 10 möglich.

In einer vorteilhaften Weiterbildung der Erfindung lösen sich die Brücken 34 beispielsweise durch Einwirkung von thermischer Energie bzw. bei Temperaturen im Bereich der Betriebstemperatur der Brennkraftmaschine selbst auf, so daß beim Ablösen eines der Dichtungsteile 30 bzw. 32 diese Brücken bereits unterbrochen sind und nicht mehr gelöst werden müssen. Jedoch ist jeder andere Mechanismus zum Lösen der Brückenverbindungen 34 möglich, beispielsweise ein Material, welches allein im Verlaufe der Zeit eine Umbildung, beispielsweise chemisch, ausführt, welche zu einem Lösen der Brückenverbindungen 34 führt, oder welches aufgrund von z. B. thermisch bedingten Relativverschiebungen zerreißt.

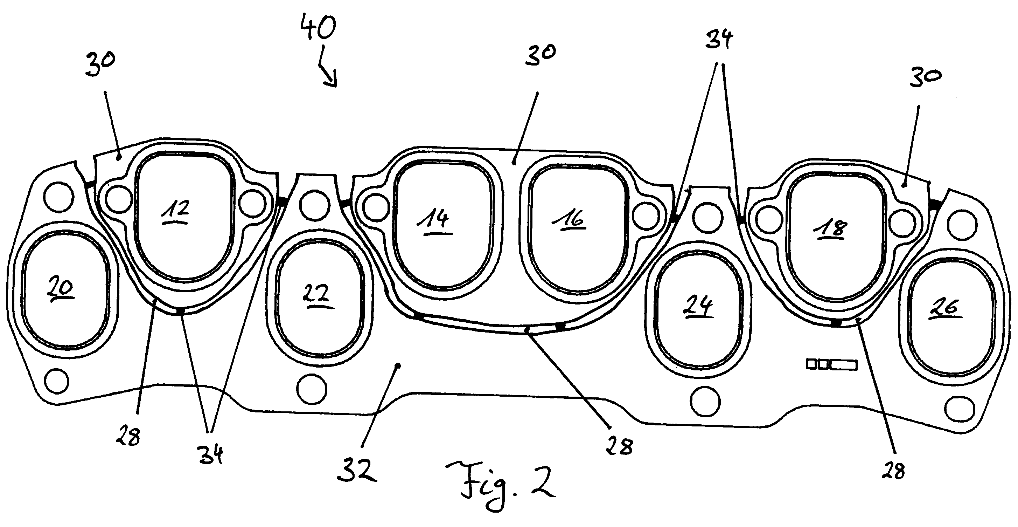

Fig. 2 zeigt eine andere bevorzugte Ausführungsform einer erfindungsgemäßen Dichtung 40. Hierbei sind gleiche Teile mit gleichen Bezugsziffern, wie in Fig. 1, bezeichnet, so daß zur Beschreibung dieser Teile auf die obigen Erläuterung zu Fig. 1 verwiesen wird.

Im Unterschied zur Ausführungsform 10 von Fig. 1 ist bei der Dichtung 40 gemäß Fig. 2 die Trennfuge 28 derart ausgebildet, daß ein einziges Abgaskrümmer-Dichtungsteil 32 und mehrere Ansaugluft-Dichtungsteile 30 ausgebildet sind. Beim Austausch lediglich des Abgaskrümmer-Dichtungsteiles 32 ist dieses als ein einstückiges Teil einfach abziehbar, während die übrigen Dichtungsteile 30 zwischen Zylinderkopf und dem Ansaugluftkrümmer verbleiben.

Selbstverständlich ist es auch möglich, die Trennfuge 28 derart auszubilden, daß mehrere Abgaskrümmer-Dichtungsteile 32 und ein Ansaugluft-Dichtungsteil 30 oder mehrere Ansaugluft-Dichtungsteile 30 und mehrere Abgaskrümmer-Dichtungsteile 32 abgetrennt werden. Erfindungswesentlich ist lediglich, daß immer alle Öffnungen 12, 14, 16 und 18 des Ansaugluftbereiches von allen Öffnungen 20, 22, 24 und 26 des Abgasbereiches getrennt sind. Bei Trennung in mehrere Abgaskrümmer-Dichtungsteil 32 ergibt sich zusätzlich der Vorteil, daß bedarfsweise einzelne Dichtungsbereiche der Öffnungen 20, 22, 24 und 26 für den Abgasbereich austauschbar sind.

## Patentansprüche

1. Dichtung (10,40) für eine Verbindungsstelle zwischen einem Zylinderkopf und einem Ansaugluft- und einem Abgaskrümmer einer Brennkraftmaschine, insbesondere eines Kraftfahrzeuges, wobei die Dichtung (10,40) entsprechend einer Anzahl von Ansaug- bzw. Abgasrohren wenigstens eine erste Öffnung (12,14,16,18) für einen Ansaugluftstrom und wenigstens eine zweite Öffnung (20,22,24,26) für einen Abgasstrom aufweist,
dadurch gekennzeichnet, daß
alle zweiten Öffnungen (20,22,24,26) für den Abgasstrom durch wenigstens eine Trennfuge (28) von den ersten Öffnungen (12,14,16,18) für den Ansaugluftstrom derart getrennt sind, daß die Dichtung (10,40) wenigstens ein Ansaugluft-Dichtungsteil (30) und wenigstens ein Abgaskrümmer-Dichtungsteil (32) aufweist und in der Trennfuge (28) zwischen dem Ansaugluft-Dichtungsteil (30) und dem Abgaskrümmer-Dichtungsteil (32) zumindest eine Brücke (24) ausgebildet ist.

2. Dichtung (10,40) nach Anspruch 1,
dadurch gekennzeichnet, daß
die Brücke (34) oder die Brücken (34) aus einem Material gefertigt sind, welches sich oder die Verbindung zwischen dem Ansaugluft-Dichtungsteil (30) und dem Abgaskrümmer-Dichtungsteil (32) bei einer Betriebstemperatur der Brennkraftmaschine löst.

3. Dichtung (40) nach Anspruch 1 oder 2,
dadurch gekennzeichnet, daß
die Trennfuge jeweils den Abgaskrümmer-Dichtungsteil und/oder den Ansaugluft-Dichtungsteil in mehrere, insbesondere zwei, drei oder vier Teile teilt.
